# FASCICULE DE BREVET EUROPEEN

(11) **EP 1 227 135 B1**
(45) Date de publication et mention de la délivrance du brevet: **24.08.2005**
(21) Numéro de dépôt: 02398001.4
(22) Date de dépôt: 10.01.2002
(51) Int. Cl.: C09D 5/44

(54) **Procédé et bain électrolytique pour l' obtention par électropolymérisation d' un revêtement homogène et adhérent du polypyrrole sur des surfaces de métaux oxydables**
Verfahren und elektrolytisches Bad zur Herstellung durch Elektropolymerisierung eines homogenen und haftenden Polypyrrol-Überzugs auf der Oberfläche von oxydierbaren Metallen
Process and electrolytic bath for producing by electropolymerization a homogeneous and adherent polypyrrole coating on surfaces of oxidizable metals

(30) Priorité: 11.01.2001 PT 10254901; 11.01.2001 PT 10255001
(43) Date de publication de la demande: 31.07.2002
(73) Titulaire: Ferrao de Paiva Martins, José Inácio, 4200-477 Porto (PT)
(72) Inventeur: Ferrao de Paiva Martins, Josè Inacio, 4200-477 Porto (PT); Bazzaoui, Mohammed, Oujda 60000 (MA); Bazzaoui, El Arbi, Oujda 60000 (MA); de Fatima Ferrao de Paiva Martins, Laura, 4425-656 Pedroucos (PT)

(56) Documents cités:
- EP-A- 0 659 794
- FR-A- 2 698 379
- FR-A- 2 698 380
- US-A- 4 569 734

## Description

Cette invention a comme objet la mise au point d'un procédé qui permet l'obtention de revêtements homogènes et adhérents de polypyrrole (PPy) sur des surfaces de métaux oxydables et de leurs alliages notamment à base de zinc, fer, nickel, étain, tungstène, cuivre, argent, or et de platine. Le bain électrolytique de ce procédé est composé d'une solution aqueuse ou hydroalcoolique contenant du pyrrole et/ou des pyrroles substitués et des ions tartrate ou malate (à l'exception du zinc pour l'anion malate) respectivement de formules chimiques C₄O₆H₄²⁻ et C₄O₅H₄²⁻.

Un des buts de la présente invention vise la protection contre la corrosion des objets métalliques oxydables, à partir de l'électrodéposition de couches de polypyrrole homogènes et adhérents à ces surfaces. Ces revêtements polymériques conducteurs peuvent aussi servir à d'autres applications parmis lesquelles on peut citer les circuits électriques, les semi-conducteurs, les détecteurs, les accumulateurs, les cellules photovoltaïques et les membranes.

Dans la présente demande les expressions "pyrrole" et "polypyrrole" sont utilisées respectivement pour designer un (ou plusieurs) monomère pyrrole et/ou dérivés d'un (ou plusieurs) monomère pyrrole et un polymère de pyrrole comme un polymère de dérivés de pyrrole.

L'électropolymérisation du pyrrole est définie dans cette invention par une oxydation électrochimique du monomère ou des monomères dissoutes dans le bain électrolytique. Cette oxydation s'effectue au niveau d'une anode qui peut être une pièce d'un métal oxydable. La cathode peut être de l'acier inox ou tout autre métal noble ou inerte comme le platine, l'or ou le graphite. L'électrode de travail (anode) et la contre électrode (cathode) sont liées par un générateur et trempées dans une solution aqueuse ou hydroalcoolique contenant des ions C₄O₆H₄²⁻ ou C₄O₅H₄²⁻ et du pyrrole.

Le film de polypyrrole obtenu après électropolymérisation du pyrrole sur l'électrode de travail se trouve oxydé et dopé par des ions tartrate ou malate. La continuité du dépôt des couches de polypyrrole et la croissance de son épaisseur sont assurées par sa propriété conductrice. Le dédopage du film peut se faire par une réduction des films de polypyrrole après un traitement chimique par un agent réducteur comme l'ammoniaque et la soude ou après un traitement électrochimique en imposant aux électrodes revêtues un potentiel qui se trouve à gauche du pic de réduction du polypyrrole.

La difficulté majeure de l'élaboration des films de polypyrrole sur des surfaces métalliques oxydables réside en effet dans la instabilité de la surface métallique lors de la réaction d'électropolymérisation, qui fait que le métal généralement se dissout avant que l'électropolymérisation ait lieu. Cette instabilité est d'autant plus grande que le métal est plus électronégative et par conséquent la différence entre le potentiel d'oxydation d'électrode de travail et celui de l'oxydation du pyrrole (0.7 V *vs*. SCE) est plus élevé. Par exemple, dans le cas du zinc cette différence est supérieure à 1.2 V. La solution donc à trouver, dans le cas de chaque métal, des conditions expérimentales susceptibles de ralentir ou de bloquer le processus de dissolution anodique du substrat sans empêcher la réaction d'électropolymérisation de se produire.

Plusieurs travaux concernant la synthèse électrochimique des polymères conducteurs électroniques ont été réalisés en milieux organiques. Cependant, d'un point de vue économique et écologique, ces milieux électrolytiques organiques présentent plusieurs inconvénients. En effet, économiquement, le coût des solvants organiques et des électrolytes supports qui y sont solubles est relativement élevé. Ecologiquement, la majorité de ces milieux organiques présentent des degrés élevés de toxicité et sont donc polluants pour l'environnement; ce qui nécessite leur manipulation avec beaucoup de précautions. Dans ce contexte, le milieu aqueux s'est révélé le meilleur candidat susceptible de remplir ce rôle.

Le tipe du solvant, la nature de l'électrolyte support ou encore le traitement de l'électrode, sont autant de paramètres physico-chimiques sur lesquels on peut agir pour parvenir à déposer des films de polypyrrole adhérents sur des substrats métalliques oxydables.

Beck *et al* [1,2] ont réalisé des dépôts de polypyrrole sur substrats de fer en milieu aqueux d'acide oxalique. Cependant, les films de PPy obtenus sont moins adhérents à la surface de l'électrode. Les mêmes auteurs, ont amélioré cette adhérence en procédant toutefois préalablement à une modification de la surface de fer par une mince couche d'oxyde de manganèse [3].

Des films homogènes et très adhérents de PPy ont été obtenus en solution aqueuse d'oxalate de sodium sur électrodes de zinc ayant subit un traitement préalable au sulfure de sodium [4]. L'adhérence des films obtenus dans ce milieu diminue remarquablement, mais peut être améliorée après cuisson du film de PPy. Ils ont ensuite amélioré cette technique d'électropolymérisation en la réduisant à une seule étape [5], qui consiste à oxyder anodiquement le pyrrole dans une solution d'oxalate de sodium contenant une faible quantité de sulfure de sodium à pH 5. En utilisant la même solution d'oxalate, les mêmes chercheurs ont électrodéposé des films de PPy sur des électrodes de fer traitées préalablement par une solution 10 % d'acide nitrique [6].

Par ailleurs, des solutions aqueuses ou hydroalcoolique à base de salicylates ont été également utilisées [7] et ont permis d'électrosynthétiser des films uniformes et adhérents de polypyrrole sur substrats métalliques oxydables notamment à base de zinc, d'aluminium, de nickel et leurs alliages. Les films obtenus à des densités de courant élevées sont caractérisés par une précipitation des cristaux de l'anion dopant sur la face externe du polymère d'où la nécessité d'une agitation au cours de la manipulation pour obtenir une bonne qualité du revêtement.

Dans la présente invention, nous exposerons un nouveau procédé d'élaboration de couches épaisses, homogènes et très adhérentes de polypyrrole en milieu aqueux ou hydroalcoolique sur des métaux oxydables sans passer par l'étape préliminaire de passivation chimique ou électrochimique de la surface de l'électrode. Ce procédé est réalisé à travers d'une solution aqueuse ou hydroalcoolique contenant des ions tartrate ou malate (à l'exception du zinc pour l'ion malate).

L'électropolymérisation est effectuée à un pH compris entre 3 et 10, de préférence entre 6.5 et 7.5. La densité de courant à appliquer doit être suffisante pour que le potentiel enregistré soit supérieur ou égal à la valeur du potentiel d'oxydation du pyrrole. Cette valeur dépend de la nature de l'électrode de travail. Le bain est maintenu à la température ambiante, mais les températures entre 10 et 60°C peuvent aussi être utilisés.

Les revêtements de polypyrrole obtenus sur les électrodes de métaux oxydables par le présent procédé sont tous homogènes et d'une adhérence de 100% selon le test AFNOR NFT 30038. Le test consiste à coller un morceau de ruban adhésif sur la surface quadrillée (25 petits carreaux d'environ 4 mm² de surface) de polymère et de le retirer après. Le nombre de carreaux qui restent accrochés à l'électrode donne une évaluation de l'adhérence du polymère à la surface du métal.

### Exemple 1 :

Bain électrolytique d'une solution aqueuse de tartrate de sodium 0.2 M et pyrrole 0.5 M à température ambiante.

L'anode est une plaque de zinc polie au papier abrasif (100-grade) puis lavée avec de l'acétone. La cathode est une plaque d'acier inoxydable.

La densité de courant appliquée est 15 mA cm⁻² durant 10 minutes. La vitesse de déposition d'un film noir homogène et adhérent de polypyrrole est de 2 µm / minute.

### Exemple 2:

Les mêmes conditions du bain électrolytique et procédé électrochimique de l'exemple 1. L'anode cette fois est une plaque de fer.

La densité de courant imposée est 15 mA cm⁻² durant 10 minutes. L'obtention d'un film noir homogène et adhérent de polypyrrole avec une épaisseur de 40 µm.

### Exemple 3:

Les mêmes conditions de composition du bain électrolytique et procédé électrochimiques de l'exemple 1. L'anode est constituée par une plaque de fer ayant subit un traitement de décapage chimique dans une solution d'acide chlorhydrique 20% durant 10 minutes.

La densité de courant imposée est de 10 mA cm⁻² durant 10 minutes. L'obtention d'un film homogène et adhérent de polypyrrole avec une épaisseur de 20 µm environ. L'électrode de fer revêtue subit ensuite le test de distorsion autour d'un barreau de 1 cm de diamètre selon la norme ASTM B 489-68. Aucun arrachement ou destruction du film n'est observé, ce qui prouve une bonne adhérence du revêtement.

### Exemple 4:

Les mêmes conditions de composition du bain électrolytique et procédé électrochimiques de l'exemple 1. Le bain est équipé de trois électrodes ; une plaque de fer comme électrode de travail, une plaque d'acier inoxydable comme contre électrode et une électrode Ag/AgCl comme référence.

L'électropolymérisation du pyrrole est effectuée par la technique potentiodynamique en balayant le potentiel entre -1.1 et 1.7 V *vs*. Ag/AgCl à une vitesse de 100 mV s⁻¹ pendant 10 cycles. L'électrode est revêtue par un film noir homogène et adhérent de polypyrrole avec une épaisseur de 2 µm.

### Exemple 5:

Les mêmes conditions du bain de l'exemple 4, un film noir, homogène et adhérent de polypyrrole est formé sur l'électrode de fer en appliquant un potentiel de 1.1 V *vs*. Ag/AgCl.

### Exemple 6:

Les mêmes conditions de l'exemple 1 concernant la composition du bain électrolytique, la densité de courant appliquée et la durée de l'électrolyse. L'électrode de travail est une plaque d'acier galvanisé. La cellule électrochimique contenant les électrodes est maintenu dans un bain à ultrasons pendant toute la durée de l'électrolyse. Le film de polypyrrole homogène et adhérent obtenu reste en parfait état et ne présente aucun signe d'usure après plus d'une semaine de séjour dans la chambre de brouillard salin (ASTM B 117-73).

### Exemple 7:

Les mêmes conditions de l'exemple 1 concernant la composition du bain électrolytique, la densité de courant appliquée et la durée de l'électrolyse. L'anode est constituée par une poignée de porte en laiton. Le film de polypyrrole formé est adhérent et homogène. Après deux polissages soigneux de la surface couverte de PPy au papier abrasif 1000 puis à la pâte diamantée 1µm les poignées ont pris une brillance remarquable.

### Exemple 8:

Un bain électrolytique aqueux d'acide malique 0.1 M et pyrrole 0.5 M à un pH 6.8 ajusté par de la soude et à la température ambiante.

L'anode est une plaque de fer polie au papier abrasif (100-grade) et lavée à l'acétone. La cathode est une plaque d'acier inoxydable.

La densité de courant imposée est 15 mA cm⁻² durant 10 minutes. Un film homogène et adhérent de polypyrrole se forme sur l'électrode à une vitesse de 4 µm / minute.

### Exemple 9:

Les mêmes conditions de composition du bain électrolytique, d'électrodes et du procédé électrochimique de l'exemple 8.

La densité de courant imposée est 10 mA cm⁻² durant 10 minutes, le film obtenu de polypyrrole est homogène et adhérent avec une épaisseur de 20 µm.

### Exemple 10:

Les mêmes conditions de composition du bain électrolytique et procédé électrochimiques de l'exemple 8. Le bain est équipé de trois électrodes ; une plaque de fer comme électrode de travail, une plaque d'acier inoxydable comme contre électrode et une électrode Ag/AgCl comme référence.

L'électropolymérisation du pyrrole est effectuée par la technique potentiodynamique en balayant le potentiel entre -1.1 et 1.7 V *vs*. Ag/AgCl à une vitesse de 100 mV s⁻¹ pendant 10 cycles. L'électrode est revêtue par un film noir homogène et adhérent de polypyrrole avec épaisseur de 2 µm.

### Références

**[1]** F. Beck, P. Hülser and R. Michaelis, Bulletin ofElectrochem. **8** (1992) 35.
**[2]** F. Beck, R. Michaelis, F. Schloten and B. Zinger, J. Electrochim. Acta. **39** (1994) 229.
**[3]** F. Beck and R. Michaelis, *J. Coatings Technol.* **64** (1992) 59.
**[4]** P.C. Lacaze, C.A. Ferreira and S. Aeiyach, *French Patent* PSA-Citroen n° 9214092 21/11/92.
**[5]** S. Aeiyach, B. Zaid and P.C. Lacaze, *Electrochim. Acta.* **44** (1999) 2889.
**[6]** P.C. Lacaze, C.A. Ferreira, S. Aeiyach and J.J.Aaron, *French Patent* PSA-Citroen n° 9214091 24/11/92.
**[7]** P.C. Lacaze, J. Petitjean, S. Aeiyach and M. Hedayatullah, *Patent* Sollac n° 9315385 21/12/1993.

## Revendications

1. Procédé pour l'obtention d'un revêtement de polypyrrole homogène et adhérent sur des surfaces métalliques oxydable, notamment à base de zinc, de fer, de nickel, de tungstène, d'étain, de cuivre, d'argent, d'or, de platine et de leurs alliages, par électropolymérisation en utilisant un bain d'une solution aqueuse ou hydroalcoolique contenant du pyrrole et/ou des pyrroles substitués, avec ou sans agitation, **caractérisé par** la présence des ions tartrate ou malate (à l'exception du zinc pour l'anion malate) respectivement de formules chimiques C₄O₆H₄²⁻ et C₄O₅H₄²⁻.

2. Procédé selon la revendication précédente, **caractérisé par le fait que** le bain électrolytique contient un sel de tartrate ou de malate dissous, respectivement de formule chimique C₄O₆H₄²⁻ et C₄O₅H₄²⁻ avec toutes les structures moléculaires possibles, et d'une concentration égale ou supérieure a 0.1 M.

3. Procédé selon les revendications précédentes **caractérisé par le fait que** l'électropolymérisation est effectuée avec pyrrole et/ou un ou plusieurs dérivés de pyrrole de concentration totale compris entre 0.05 et 1.1 M.

4. Procédé selon les revendications précédentes **caractérisé par le fait que** l'électropolymérisation est effectuée à un pH entre 3 et 10, de préférence entre 5 et 7 et une température entre 10 et 60°C.

5. Procédé selon les revendications précédentes **caractérisé par le fait que** l'électropolymérisation est effectuée à un potentiel qui doit être supérieur ou égal au potentiel d'oxydation du pyrrole et/ou dérivés de pyrrole, par exemple 1.1 V *vs*. Ag/AgCl pour électrode de zinc pendant les premières 5 minutes.

6. Procédé selon les revendications précédentes **caractérisé par le fait que** l'électropolymérisation est effectuée en imposant une densité de courant suffisante aux pièces métalliques pour que le potentiel enregistré soit supérieur ou égal à la valeur du potentiel d'oxydation du pyrrole.

7. Procédé selon les revendications précédentes, **caractérisé par le fait que** le film de polypyrrole électrodéposé en utilisant un bain d'ultrasons pour donner une résistance plus efficace à la corrosion des tôles métalliques, sandwichs métalliques ou alliages métalliques, par exemple les tôles utilisées dans l'industrie automobile.

8. Procédé selon les revendications précédentes, **caractérisé par le fait que** le film de polypyrrole peut être utilisé comme couche primaire en-dessous d'un revêtement de peinture par électrophorèse ou toutes autres polymères.

9. Procédé selon les revendications précédentes, **caractérisé par le fait que** le film de polypyrrole peut être utilisé dans l'esthétique des objets faits à base de matériaux oxydable après un polissage soigneux de la pièce revêtue, par exemple : robinets, poignées de portes.

10. Procédé selon les revendications précédentes, **caractérisé par le fait que** les films de polypyrrole obtenus sur les électrodes de métaux oxydables sont tous homogènes et d'une adhérence de 100% selon le test AFNOR NFT 30038, et destinés à divers applications, notamment comme couche de protection contre la corrosion, comme détecteur, comme membrane ou comme circuit électrique.

## Patentansprüche

1. Prozess zur Erlangung von einem homogenen an oxidierbaren metalischen Oberflaechen von Zink, Eisen, Nickel, Wolfram, Zinn, Kupfer, Silber, Gold und Platin, sowie seine Ligen, haftenden polipirrol Ueberzug; durch Electropolimerisierung von einer waesserigen mit oder ohne alkohol, mit pirrol und / oder einer von seinen Derivaten, mit oder ohne Bewegung. Diese elektrolytische Loesungen werden durch der Anwesenheit von Tartarationen sowie Malationen (in den Loesungen wo Zink anwesend ist, ist kein Malation vorhandeln), die mit den beiden chemischen Formeln **gekennzeichnet** werden koennen (C₄O₆H₄²⁻ und C₄O₅H₄²⁻), karakterisiert.

2. Prozess laut der ersten Beanspruchung, karacterisiert durch den Fakt, dass der elektrolytischer Bad eine Menge gleich oder grosser als 0,1 M von Tartarat-, oder Malationen (C₄O₆H₄²⁻ und C₄O₅H₄²⁻), in allen moeglichen molekularen Strukturen hat.

3. Prozess laut der zwei vorhergehende Beanspruchungen karacterisiert durch den Fakt, dass die Elektropolimerisierung mit Pirrol oder/und seine Derivate, stattfindet, mit einer gesammte Konzentration zwischen 0,05 und 1,1 M.

4. Prozess laut der drei vorhergehende Beanspruchungen karacterisiert durch den Fakt, dass die Elektropolimerisierung zwischen pH 3 und 10 (Besser zwischen 5 und 7) und bei einer Timperatur zwischen 10 und 60°C stattfindet.

5. Prozess laut der vier vorhergehende Beanspruchungen karacterisiert durch den Fakt, dass die Elektropolimerisierung bei einem hoeheren oder gleichen Potential, dass benoetigt ist um Pirrol oder seine Derivate zu oxidieren, stattfindet; zB 1,1 V vs Ag/AgCl fuer den Zink fuer die ersten 5 Minuten.

6. Prozess laut der fuenf vorhergehende Beanspruchungen karacterisiert durch den Fakt, dass die Elektropolimerisierung mit der benoetigen Durchstoemung von Elektrizitaet der metal Gegenstaende, um einen Potential gleich oder hoeher als dessen der oxidation des Pirrols oder seine Derivate zu erzeugen, stattfindet.

7. Prozess laut der sechs vorhergehende Beanspruchungen karacterisiert durch den Fakt, dass der Polypirrol Film durch Ultraschall erzeugt werden kann und so bessere Wiederstehung zur Korrosion von Metalplatten, Sandwiches und Ligien zeigt. ZB. Automotive Industrie

8. Prozess laut der sieben vorhergehende Beanspruchungen karacterisiert durch den Fakt, dass der Polypirrol Film die electrische Lackage oder polimere Film ersetzen kann.

9. Prozess laut der sieben vorhergehende Beanspruchungen karacterisiert durch den Fakt, dass der Polypirrol Film die estetik von Wasserhaehnen und Tuergriffen, nachdem sie sorgfaelltig poliert worden sind, verbessern kann.

10. Prozess laut der sieben vorhergehende Beanspruchungen karacterisiert durch den Fakt, dass der Polypirrol Film 100% an oxidiebaren Oberflaechen haften (test AFNOR NFT 30038), und koennen so verschiedene Applikationen haben, wie gegen Korrosion schuetzen, Membran, detector oder elektrische Verknuepfungen.

## Claims

1. Process for obtaining homogeneous and adherent polypyrrole coating on oxidizable metallic surfaces, mainly on zinc, iron, nickel, tungsten, tin, copper, silver, gold, platinum and their alloys, by electropolymerization using a bath of an aqueous solution or hydroalcoholic containing pyrrole and/or derivate of pyrrole, with or without agitation, **characterized by** the presence of tartrates or malate ions (to the exception of zinc for anion malate), respectively of chemical formulas C₄O₆H₄²⁻ and C₄O₅H₄²⁻.

2. Process according to the previous claim, **characterized by** the fact that the electrolytic bath contains a salt of tartrate or malate dissolved, respectively of chemical formula C₄O₆H₄²⁻ and C₄O₅H₄²⁻ with all possible molecular structures of concentration equal or superior to 0.1 M.

3. Process according to the previous claims **characterized by** the fact that the electropolymerization is performed with pyrrole and/or a derivate of pyrrole of total concentration of pyrrole between 0.05 and 1.1 M.

4. Process according to the previous claims **characterized by** the fact that the electropolymerization is performed at a pH between 3 and 10, of preference between 5 and 7 and a temperature between 10 and 60°C.

5. Process according to the previous claims **characterized by** the fact that the electropolymerization is performed to a potential that must be superior or equal to the potential of oxidization of the pyrrole and/or of the derivate of pyrrole, for example 1.1 V vs. Ag/AgCl for electrode of zinc during the first 5 minutes.

6. Process according to the previous claims **characterized by** the fact that the electropolymerization is performed by imposing a sufficient current density to the metallic pieces so that the potential recorded is equal or superior to the value of the potential of oxidation of the pyrrole.

7. Process according to the previous claims, **characterized by** the fact that the film of polypyrrole is electrodeposited using a bath of ultrasonic waves to give more efficient resistance to the corrosion of metallic sheet, metallic sandwiches or metallic alloys, for example the metal sheet used in the automotive industry.

8. Process according to the previous claims, **characterized by** the fact that the film of polypyrrole can be used as primary layer instead of a painting coating by electrophoresis or all other polymers.

9. Process according to the previous claims, **characterized by** the fact that the film of polypyrrole can be used in the aesthetics of objects constructed of oxidizable materials after a smooth polish of the coated piece, for example: taps, handfuls of doors.

10. Process according to the previous claims, **characterized by** the fact that the films of polypyrrole obtained on the electrodes of oxidizable metals are all homogeneous and of an adherence of 100% according to the AFNOR test NFT 30038, and intended to various applications, mainly as protective layer against the corrosion, as detectors, as membrane or as electric circuit.
